# EUROPÄISCHE PATENTSCHRIFT

(11) **EP 2 450 204 B1**
(45) Veröffentlichungstag und Bekanntmachung des Hinweises auf die Patenterteilung: **01.07.2015**
(21) Anmeldenummer: 11187771.8
(22) Anmeldetag: 03.11.2011
(51) Int. Cl.: B60H 1/00

(54) **Klimaanlage für ein Kraftfahrzeug**
Air conditioning for a motor vehicle
Climatisation pour un véhicule automobile

(30) Priorität: 03.11.2010 DE 102010043334
(43) Veröffentlichungstag der Anmeldung: 09.05.2012
(73) Patentinhaber: MAHLE Behr GmbH & Co. KG, 70469 Stuttgart (DE)
(72) Erfinder: Schall, Matthias, 73760 Ostfildern-Ruit (DE); Raimann, Joachim, 70825 Korntal-Münchingen (DE); Bopp, Alexander, 75428 Illingen (DE)
(74) Vertreter: Grauel, Andreas

(56) Entgegenhaltungen:
- DE-A1- 10 244 954
- DE-A1-102005 048 910
- DE-B3- 10 256 619
- JP-A- 10 071 821

## Beschreibung

Die Erfindung betrifft eine Klimaanlage für ein Kraftfahrzeug, bei welcher ein Gebläse Luft ansaugt, die durch einen Verdampfer und/oder einen Heizer strömt, wobei dem Gebläse ein Luftbypass nachgeordnet ist, der Luft am Verdampfer vorbei führt.

Es sind Klimaanlagen bekannt, welche einen Luftbypass aufweisen, die Luft an einem, in der Klimaanlage enthaltenen Verdampfer vorbeileiten. Die Luft wird dabei durch ein Gebläse in den Luftbypass und/oder den Verdampfer gedrückt und einem Heizer zugeführt, wobei die durch den Luftbypass, den Verdampfer und/oder den Heizer transportierte Luft in einem Mischraum gemischt wird.

Ein solcher Luftbypass hat den Vorteil, dass die Energieeffizienz der Klimaanlage verbessert wird und ein besserer lnnenraumkomfort im Kraftfahrzeug erzielt wird. Dabei wird die von dem Gebläse geförderte Luft teilweise durch den Luftbypass in den Mischraum der Klimaanlage geführt, wenn der Ver dampfer in seiner Funktion zur Kühlung der Luft nicht benötigt wird. Da der Verdampfer normalerweise einen Widerstand im Strömungsweg der Luft darstellt, würde durch diesen Widerstand des Verdampfers ein Druckverlust auftreten, welcher durch die Verwendung des Luftbypasses reduziert wird. Des Weiteren verbleibt durch den Einsatz des Luftbypasses Feuchtigkeit in der Luft, die ansonsten im Verdampfer durch das Abkühlen der Luft auskondensiert wird.

Solche Luftbypässe benötigen allerdings in der Klimaanlage zusätzlichen Bauraum, da sie entweder über, unter oder neben dem Verdampfer angeordnet sind. Da ein solcher Bauraum bei heute typischen Klimaanlagen im Cockpit oft nicht vorhanden ist, muss der Verdampfer entsprechend in seiner Breite und/oder seiner Höhe verkleinert werden, um den notwendigen Platz für den Luftbypass zu schaffen. Durch die verringerte Größe des Verdampfers sinkt die installierte Kälteleistung. Weiter steigt der luftseitige Druckabfall, was entweder zu einer Verringerung des Luftdurchsatzes führt, die durch den Verdampfer transportiert werden kann, oder es wird ein stärkeres Gebläse benötigt, um den gleichen Luftdurchsatz bei dem nun erhöhten Druckabfall zu fördern. Daraus ergibt sich eine höhere Leistungsaufnahme des Gebläses, was zu einer Effizienzverschlechterung der Klimaanlage führt und konträr zu dem Effizienzgewinn steht, welcher durch den Luftbypass selbst erzielt werden soll.

Dokument DE-A-102005048910 offenbart eine Klimaanlage gemäß dem Oberbegriff des Anspruchs 1.

Der Erfindung liegt somit die Aufgabe zu Grunde, eine Klimaanlage für ein Kraftfahrzeug darzustellen, bei welchem auf zusätzlichen Bauraum für einen Luftbypass im Cockpit des Kraftfahrzeuges weitgehend verzichtet wird.

Erfindungsgemäß wird die Aufgabe dadurch gelöst, dass zwischen dem Gebläse und dem Verdampfer ein Luftkanal vorgesehen ist, aus welchem der Luftbypass abzweigt. Da der Luftbypass aus einem Kanal abgegriffen wird, welcher das Gebläse und den Verdampfer verbindet, ist zwischen Gebläse und Verdampfer ausreichend Bauraum für den Luftbypass vorhanden. Es wird kein zusätzlicher Bauraum für den Luftbypass benötigt, da der Luftbypass nur Raum einnimmt, welcher an sich ungenutzt in der Klimaanlage vorhanden ist. Eine bauliche Veränderung des Verdampfers, insbesondere eine Verkleinerung, ist somit nicht notwendig, wodurch die Leistung des Verdampfers beibehalten wird.

In einer Ausgestaltung ist der Luftbypass in seinen Abmaßen, insbesondere seiner Breite geringer als der Luftkanal. Durch eine solche optimierte Gestaltung des Luftbypasses wird der an sich vorhandene Raum maximal genutzt.

In einer besonders einfachen Ausführungsform weist der Luftkanal eine Öffnung auf, an welche der Luftbypass angeschlossen ist. So wird durch ein konstruktiv einfaches Verfahren eine Verzweigung der von dem Gebläse geförderten Luft in den Luftkanal zum Verdampfer bzw. den die Luft am Verdampfer vorbei leitenden Luftbypass realisiert.

Vorteilhafterweise besteht der Luftbypass aus einem Bypasskanal und mindestens einem, an den Bypasskanal anschließenden Querkanal, wobei der Querkanal sich insbesondere entlang der Längserstreckung des Verdampfers ausdehnt. Während der Bypasskanal den Teil des Luftbypasses darstellt, welcher die Luft aus dem Luftkanal abzweigt, dient der mindestens eine Querkanal dazu, die Luft entlang dem Verdampfer zu fördern und zu verteilen. Dadurch, dass der Verdampfer in seiner ursprünglichen Größe beibehalten werden kann, wird die einmal installierte Kälteleistung beibehalten. Ein Druckabfall, welcher eine Verringerung des Luftdurchsatzes oder ein stärkeres Gebläse nach sich ziehen würde, wird vorteilhafterweise unterbunden, so dass immer der gleiche Luftdurchsatz bei einem einmal für die Klimaanlage dimensionierten Gebläse durch den Verdampfer gefördert werden kann. Durch eine solche Ausgestaltung wird die Energieeffizienz der Klimaanlage durch den Luftbypass erhöht.

In einer Weiterbildung strömt die, aus dem Querkanal ausströmende Luft in einen Mischraum ein, wo diese mit der, durch den Verdampfer und/oder den Heizer geleiteten Luft vermischbar ist, wobei sich an den Mischraum mehrere Luftaustrittskanäle anschließen. Durch die Gestaltung des mindestens einen Querkanals entlang dem Verdampfer wird sichergestellt, dass nach dem Verdampfer die durch den Verdampfer geleitete Luft und die durch den Luftbypass geleistete Luft gut miteinander vermischt werden. Eine solche gezielte Luftmischung und Verteilung ist bei den nach dem Stand der Technik bekannten Lösungen, bei welcher der Luftbypass unter, über oder seitlich des Verdampfers angeordnet ist, nur sehr eingeschränkt möglich.

In einer Variante ist zumindest ein Querkanal in seiner Lage, insbesondere seiner Höhe, an dem Verdampfer einstellbar. Dies hat den Vorteil, dass sehr genau beeinflusst werden kann, wo die Luft aus dem Luftbypass in den Mischraum der Klimaanlage austritt. Der Ort der Einbringung der durch den Luftbypass geförderten Luft ist durch die Lage der Querkanäle bestimmt. Da diese höhenveränderbar sind, entfallen bei der erfindungsgemäßen Lösung zusätzliche Luftleitelemente, Kanäle oder Mischelemente, um eine ausreichende Vermischung der Luftströme des Luftbypasses bzw. der durch den Verdampfer strömenden Luft zu gewährleisten. Diese Vermischung wird ausdrücklich nur durch die Anordnung der Querkanäle entlang des Verdampfers beeinflusst. Durch die Einsparung solcher zusätzlichen Bauteile wird der notwendige Bauraum für eine solche Klimaanlage verringert, wobei sich gleichzeitig die Kosten für die Herstellung einer solchen Klimaanlage verringern und luftseitig verursachte Druckabfälle unterbunden werden.

In einer Ausgestaltung weist der mindestens eine Querkanal mindestens eine Luftaustrittsöffnung auf, durch welche die Luft parallel zum Verdampfer und/oder in Richtung zum Verdampfer und/oder in eine vom Verdampfer abgewandte Richtung ausströmt. Durch die Gestaltung des Querkanals in Form und Querschnitt sowie der Größe und der Anordnung der Luftaustrittsöffnun-gen in diesem Querkanal wird gewährleistet, dass die durch den Luftbypass geförderte Luft in die Luft, welche durch den Verdampfer strömt, eingebracht wird. Die Vermischung der beiden Luftströme kann hier gezielt beeinflusst werden. Ebenso wird die durch den Luftbypass geförderte Luft gezielt in den Luftweg nach dem Verdampfer eingebracht, so dass die Beaufschlagung einzelner Luftaustrittskanäle der Klimaanlage gezielt beeinflusst werden kann. Insbesondere durch die Höhenverstellung wird gewährleistet, dass ein Querkanal so angeordnet ist, dass die aus ihm ausströmende Luft gezielt in Richtung des Bereiches des Entfrosterkanals, des Belüftungskanals oder des Fußraumkanals der Klimaanlage gefördert wird.

In einer Weiterbildung weist der Bypasskanal und/oder der mindestens eine Querkanal ein Luftregelelement, insbesondere eine Luftklappe, auf. Durch diese Luftklappe wird die Luftmenge, die durch den Luftbypass fließt, eingestellt.

In einer weiteren Ausgestaltung ist das Gebläse seitlich zum Verdampfer und/oder dem Heizer angeordnet. Diese Anordnung hat den Vorteil, das der zwischen dem Gebläse und dem Verdampfer vorhandene Raum zur Einbringung des Luftbypasses genutzt werden kann.

In einer Variante ist dem Gebläse ein Filter nachgeordnet, wobei der Luftkanal zwischen Filter und Verdampfer ausgebildet ist und der Luftbypass nach dem Filter aus dem Luftkanal abgezweigt ist. Mittels eines solchen druckseitig angeordneten Filters wird sichergestellt, das keine ungefilterte Luft dem Fahrzeuginnenraum zugeführt wird. Dabei kann der Filter aber auch in dem Luftkanal selbst baulich angeordnet sein, wobei bevorzugt der Luftbypass die Luft erst hinter dem Filter aus dem Luftstrom des Luftkanals abzweigt.

Die Erfindung lässt zahlreiche Ausführungsformen zu. Eine davon soll anhand der in der Zeichnung dargestellten Figuren näher erläutert werden.

Es zeigt:
- Figur 1:: eine Prinzipdarstellung einer asymmetrischen Klimaanlage.
- Figur 2:: eine Frontansicht der asymmetrischen Klimaanlage nach Figur 1 mit einem Luftbypass am Verdampfer,
- Figur 3:: eine Seitenansicht der Klimaanlage nach Figur 1 mit einem Luftbypass am Verdampfer.

Gleiche Merkmale sind mit gleichen Bezugszeichen gekennzeichnet.

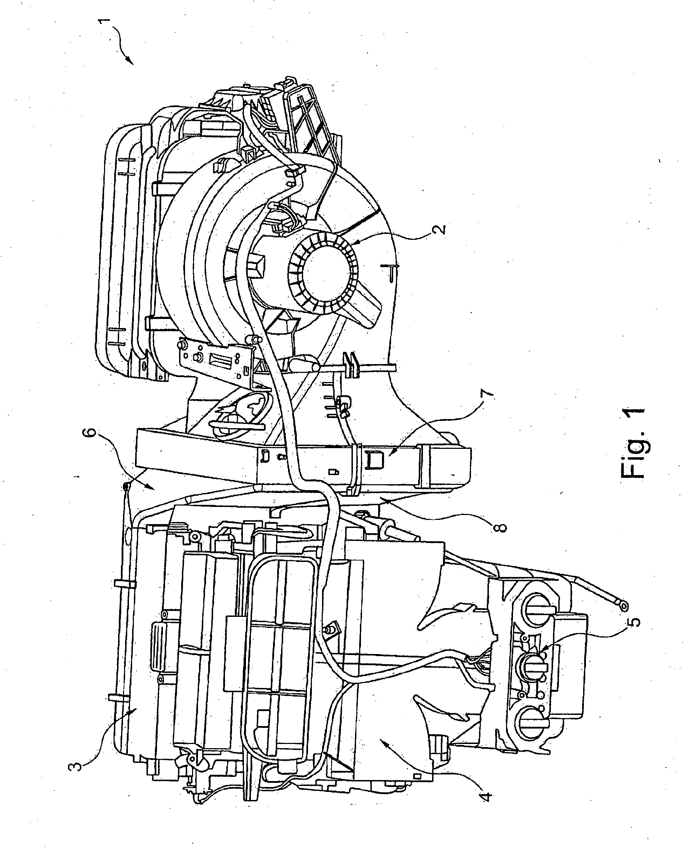

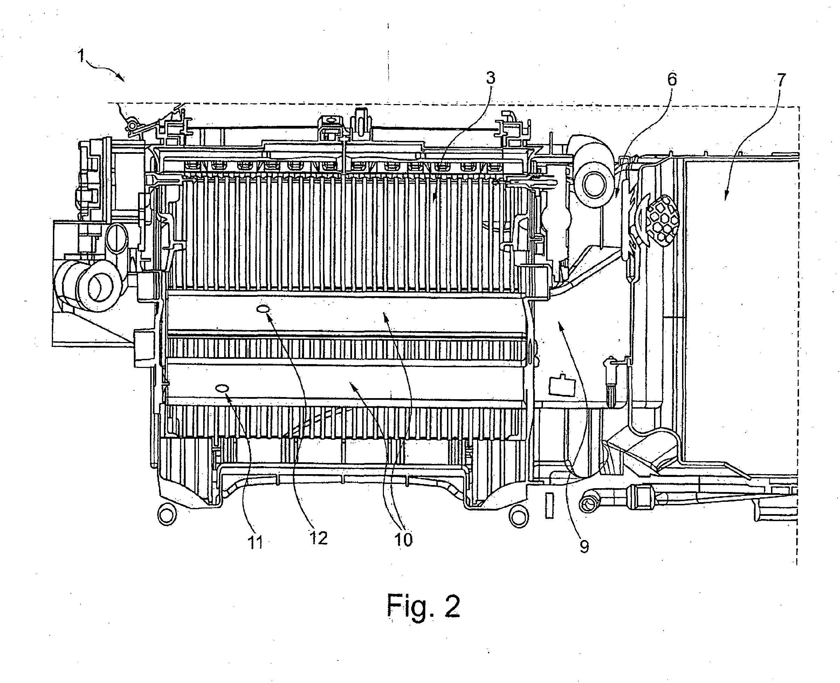

In Figur 1 ist eine Prinzipdarstellung einer asymmetrischen Klimaanlage 1 dargestellt. Bei einer solchen asymmetrischen Klimaanlage 1 ist ein Gebläse 2 seitlich angebracht und in etwa auf der gleichen Höhe eines Verdampfers 3 angeordnet. Stromabwärts vom Verdampfer 3 ist ein, einen Mischraum enthaltendes Verteilergehäuse 4 mit einem Heizer positioniert, welches mit einem Bediengerät 5 abschließt, das im Cockpit des Kraftfahrzeuges eingearbeitet ist. Zwischen dem Gebläse 2 und dem Verdampfer 3 erstreckt sich ein Luftkanal 6, in welchem ein Filter 7 positioniert ist. An der Seite des Luftkanals 6, welche dem Verdampfer 3 und dem Verteilergehäuse 4 mit Heizer zugeordnet ist, ist eine Öffnung 8 im Luftkanal 6 ausgebildet, an welcher sich ein Luftbypass 9, der in Figur 2 dargestellt ist, anschließt.

Figur 2 zeigt die Frontansicht einer gemäß Figur 1 erläuterten Klimaanlage 1. Zwischen dem Filter 7 und dem Verdampfer 3 erstreckt sich der Luftkanal 6. Dem Luftkanal 6 vorgelagert und die in Figur 1 dargestellte Öffnung 8 verschließend ist ein Bypasskanal 9. An den Bypasskanal 9 schließen sich zwei Querkanäle 10 an, die parallel zum Verdampfer 3 verlaufen. Der Luftbypass wird dabei aus dem Bypasskanal 9 und den Querkanälen 10 gebil-det. Die Querkanäle 10 sind so ausgebildet, dass sie in ihrer Höhe variierbar sind. Darüber hinaus weisen die Querkanäle Perforierungen auf, welche lediglich durch die Öffnungen 11 und 12 dargestellt sind. Diese Öffnungen 11 und 12 sind so gerichtet, dass sie einen Luftaustritt entgegen gesetzt zum Verdampfer 3 ermöglichen. Alternativ sind aber auch noch andere Luftaustrittsöffnungen denkbar. So können diese auf der entgegen gesetzten, zum Verdampfer hin gerichteten Seite genau so liegen, wie an der Schmalseite der Querkanäle 10. Dann tritt die Luft aus den Querkanälen 10 entweder zum Verdampfer 3 hin oder parallel zum Verdampfer 3 aus. Durch die Höhenverstellung und die Möglichkeit der unterschiedlichen Anordnung und der variierbaren Größe der Luftaustrittsöffnungen 11, 12 lässt sich eine gezielte Vermischung der durch den Verdampfer 3 austretenden Luft mit der Luft, welche durch den Bypasskanal 9 und die Querkanäle 10 transportiert wird, erreichen.

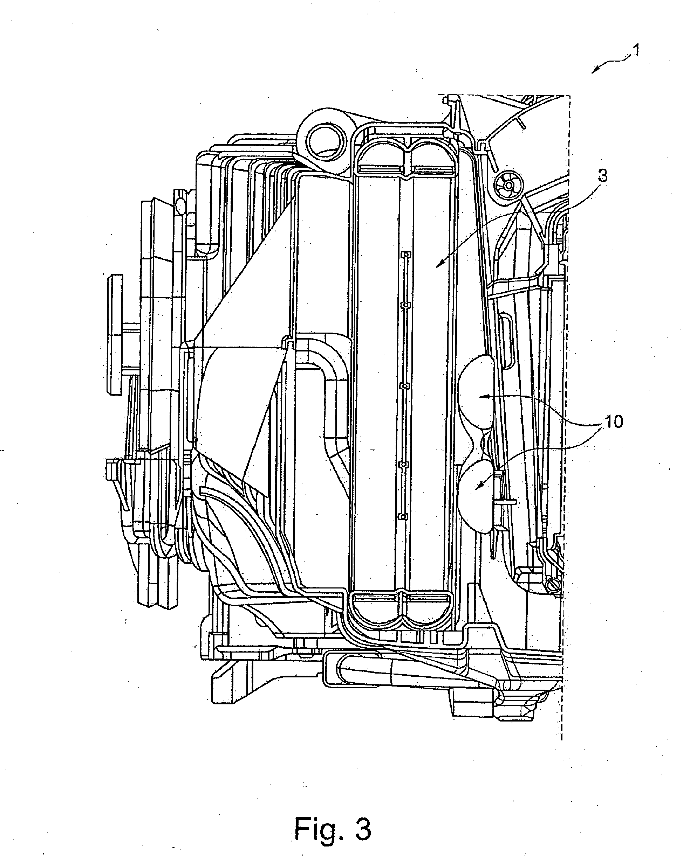

Figur 3 zeigt eine Seitenansicht der Klimaanlage 1 gemäß Figur 1 mit einem Luftbypass 9, 10 am Verdampfer 3. Der Verdampfer 3 weist an seiner rechten Seite die beiden Querkanäle 10 des Luftbypasses 9, 10 auf. Querkanäle 10 sind dabei besonders platzsparend in die Klimaanlage 1 eingefügt. Durch die mögliche Höhenverstellung der Querkanäle 10 wird die durch den Luftbypass 9, 10 geförderte Luft so gezielt in den Mischraum der Klimaanlage 1 eingebracht, dass sie entweder allein oder gemischt mit der Luft, die durch den Verdampfer 3 transportiert wird, in der Luftauslasskanäle der Klimaanlage 1 gefördert wird. Zu diesen, nicht weiter dargestellten Luftauslasskanälen gehören einmal der Entfrosterkanal, welcher den Luftstrom gegen die Windschutzscheibe richtet. Weiterhin gehört dazu der Betüftungskanal, der Luftstrom in den Fahrgastraum richtet, während der Fußraumkanal die Luft unterhalb des Cockpits austreten lässt,

Zur allgemeinen Funktionsweise der mit dem Luftbypass 9, 10 ausgestatteten asymmetrischen Klimaanlage 1 ist festzustellen, dass durch das Gebläse 2 Luft aus dem Fahrzeuginnenraum oder aus der Umgebung des Fahrzeuges in den Luftkanal 6 gedrückt wird, welche von dem Filter 7 zunächst gereinigt wird. Anschließend an das Filter 7 verzweigt sich die Luft im Luftkanal 6 einmal in Richtung zum Verdampfer 3 und zum Anderen in Richtung der Abzweigung durch den Bypasskanal 9, wobei die abgezweigte Luft durch die Querkanäle 10 weitergeleitet wird. Die aus den Querkanälen 10 austretende Luft wird anschließend wieder mit der Luft, die durch den Verdampfer 3 transportiert wurde, gemischt und je nach Einstellung des Bediengerätes 5 den Luftaustrittskanälen, zugeführt.

## Patentansprüche

1. Klimaanlage für ein Kraftfahrzeug, bei welcher ein Gebläse (2) Luft ansaugt, die durch einen Verdampfer (3) und/oder einen Heizer (4) strömt, wobei dem Gebläse (2) ein Luftbypass (9, 10) nachgeordnet ist, der Luft am Verdampfer (3) vorbei führt, wobei zwischen dem Gebläse (2) und dem Verdampfer (3) ein Luftkanal (6) vorgesehen ist, von welchem der Luftbypass (9, 10) abzweigt, **dadurch gekennzeichnet, dass** der Luftbypass (9, 10) aus einem Bypasskanal (9) und mindestens einem, an den Bypasskanal (9) anschließenden Querkanal (10) besteht, wobei der Querkanal (10) sich insbesondere entlang der Längserstreckung des Verdampfers (3) ausdehnt.

2. Klimaanlage nach Anspruch 1, **dadurch gekennzeichnet, dass** der Luftkanal (6) eine Öffnung (8) aufweist, an welche der Luftbypass (9, 10) angeschlossen ist.

3. Klimaanlage nach Anspruch 1 oder 2, **dadurch gekennzeichnet, dass** die aus dem Querkanal (10) ausströmende Luft in einen Mischraum einströmt, wo diese mit der durch den Verdampfer (3) und/oder den Heizer (4) geleiteten Luft vermischbar ist, wobei sich an den Mischraum mehrere Luftaustrittskanäle anschließen.

4. Klimaanlage nach Anspruch 1, 2 oder 3, **dadurch gekennzeichnet, dass** der mindestens eine Querkanal (10) in seiner Lage, insbesondere seiner Höhe, zum Verdampfer (3) einstellbar ist.

5. Klimaanlage nach einem der vorhergehenden Ansprüche, **dadurch gekennzeichnet, dass** der mindestens eine Querkanal (10) mindestens eine Luftaustrittsöffnung (11, 12) aufweist, durch welche die Luft parallel zum Verdampfer (3) und/oder in Richtung zum Verdampfer (3) und/oder in eine vom Verdampfer (3) abgewandte Richtung ausströmt.

6. Klimaanlage nach mindestens einem der Ansprüche 1 bis 5, **dadurch gekennzeichnet, dass** der Bypasskanal (9) und/oder der mindestens eine Querkanal (10) ein Luftregelelement, insbesondere eine Luftklappe, aufweist.

7. Klimaanlage nach mindestens einem der vorhergehenden Ansprüche, **dadurch gekennzeichnet, dass** das Gebläse (2) seitlich zum Verdampfer (3) und/oder dem Heizer (4) angeordnet ist.

8. Klimaanlage nach Anspruch 7, **dadurch gekennzeichnet, dass** dem Gebläse (2) ein Filter (7) nachgeordnet ist, wobei der Luftkanal (6) zwischen Filter (7) und Verdampfer (3) ausgebildet ist und der Luftbypass (9, 10) nach dem Filter (7) aus dem Luftkanal (6) abgezweigt ist.

## Claims

1. Air-conditioning unit for a motor vehicle, in which a fan (2) sucks in air that flows through an evaporator (3) and/or a heater (4), wherein an air bypass (9, 10) is arranged downstream of the fan (2) and guides air past the evaporator (3), wherein an air channel (6) is provided between the fan (2) and the evaporator (3), from which air channel the air bypass (9, 10) branches off, **characterised in that** the air bypass (9, 10) consists of a bypass channel (9) and at least one transverse channel (10) adjoining the bypass channel (9), wherein the transverse channel (10) widens in particular along the longitudinal extension of the evaporator (3).

2. Air-conditioning unit according to claim 1, **characterised in that** the air channel (6) has an opening (8), which is adjoined by the air bypass (9, 10).

3. Air-conditioning unit according to claim 1 or 2, **characterised in that** the air flowing out from the transverse channel (10) flows into a mixing chamber, where this air can be mixed with the air conveyed through the evaporator (3) and/or the heater (4), wherein a plurality of air discharge channels adjoin the mixing chamber.

4. Air-conditioning unit according to claim 1, 2 or 3, **characterised in that** the position, in particular the height, of at least one transverse channel (10) can be adjusted relative to the evaporator (3).

5. Air-conditioning unit according to one of the preceding claims, **characterised in that** the at least one transverse channel (10) has at least one air discharge opening (11, 12), through which the air flows out parallel to the evaporator (3) and/or in the direction towards the evaporator (3) and/or in a direction away from the evaporator (3).

6. Air-conditioning unit according to at least one of claims 1 to 5, **characterised in that** the bypass channel (9) and/or the at least one transverse channel (10) has an air regulation unit, in particular an air flap.

7. Air-conditioning unit according to at least one of the preceding claims, **characterised in that** the fan (2) is arranged to the side of the evaporator (3) and/or the heater (4).

8. Air-conditioning unit according to claim 7, **characterised in that** a filter (7) is arranged downstream of the fan (2), wherein the air channel (6) is formed between the filter (7) and evaporator (3), and the air bypass (9, 10) is branched off from the air channel (6) after the filter (7).

## Revendications

1. Système de climatisation pour un vésicule automobile, dans lequel un ventilateur (2) aspire de l'air qui circule à travers un évaporateur (3) et / ou un dispositif de chauffage (4), où, en aval du ventilateur (2), est disposée une dérivation d'air (9, 10) qui fait passer de l'air devant l'évaporateur (3), où il est prévu, entre le ventilateur (2) et l'évaporateur (3), un conduit d'air (6) à partir duquel se ramifie la dérivation d'air (9, 10), **caractérisé en ce que** la dérivation d'air (9, 10) se compose d'un conduit de dérivation (9) et d'au moins un conduit transversal (10) se raccordant au conduit de dérivation (9), où le conduit transversal (10) s'étend en particulier le long de la dimension longitudinale de l'évaporateur (3).

2. Système de climatisation selon la revendication 1, **caractérisé en ce que** le conduit d'air (6) présente une ouverture (8) à laquelle est raccordée la dérivation d'air (9, 10).

3. Système de climatisation selon la revendication 1 ou 2, **caractérisé en ce que** l'air sortant du conduit transversal (10) pénètre dans un espace de mélange, où cet air peut être mélangé avec de l'air guidé à travers l'évaporateur (3) et / ou le dispositif de chauffage (4), où plusieurs conduits de sortie d'air se raccordent à l'espace de mélange.

4. Système de climatisation selon la revendication 1, 2 ou 3, **caractérisé en ce que** le conduit transversal (10) au moins au nombre de un est réglable concernant sa position, en particulier sa hauteur, par rapport à l'évaporateur (3).

5. Système de climatisation selon l'une quelconque des revendications précédentes, **caractérisé en ce que** le conduit transversal (10) au moins au nombre de un présente au moins une ouverture de sortie d'air (11, 12) par laquelle l'air s'écoule parallèlement à l'évaporateur (3) et / ou en direction de l'évaporateur (3) et / ou dans une direction opposée par rapport à l'évaporateur (3).

6. Système de climatisation selon au moins l'une quelconque des revendications 1 à 5, **caractérisé en ce que** le conduit de dérivation (9) et / ou le conduit transversal (10) au moins au nombre de un présente un élément de régulation d'air, en particulier un volet d'air.

7. Système de climatisation selon au moins l'une quelconque des revendications précédentes, **caractérisé en ce que** le ventilateur (2) est disposé latéralement par rapport à l'évaporateur (3) et / ou par rapport au dispositif de chauffage (4).

8. Système de climatisation selon la revendication 7, **caractérisé en ce qu'**un filtre (7) est disposé en aval du ventilateur (2), où le conduit d'air (6) est configuré en étant placé entre le filtre (7) et l'évaporateur (3), et la dérivation d'air (9, 10) est ramifiée à partir du conduit d'air (6), en aval du filtre (7).
